# EUROPÄISCHE PATENTSCHRIFT

(11) **EP 1 002 355 B1**
(45) Veröffentlichungstag und Bekanntmachung des Hinweises auf die Patenterteilung: **24.10.2001**
(21) Anmeldenummer: 98916810.9
(22) Anmeldetag: 24.02.1998
(51) Int. Cl.: H02J 7/35

(54) **NETZANSCHLUSSLOSES KLEINLEISTUNGS-HAUSHALTSGERÄT**
LOW POWER HOUSEHOLD APPLIANCE UNCONNECTED TO MAINS
APPAREIL MENAGER DE FAIBLE PUISSANCE SANS RACCORDEMENT AU RESEAU

(30) Priorität: 04.08.1997 DE 19734557
(43) Veröffentlichungstag der Anmeldung: 24.05.2000
(73) Patentinhaber: Lang, Oliver, 10715 Berlin (DE)
(72) Erfinder: Lang, Oliver, 10715 Berlin (DE)
(86) Internationale Anmeldenummer: DE9800584
(87) Internationale Veröffentlichungsnummer: WO9908361

(56) Entgegenhaltungen:
- EP-A- 0 271 162
- EP-A- 0 390 253
- DE-A- 3 245 363

## Beschreibung

Die Erfindung bezieht sich auf ein netzanschlussloses Kleinleistungs-Haushaltsgerat mit einem elektrisch antreibbaren Bewegungsmodul und einem den Antrieb speisenden geräteinternen Puffer-Akkumulator, der über einen im Gerategehäuse integrierten, der Sonneneinstrahlung auszusetzenden Solargenerator unter Kontrolle einer Ladeelektronik wiederaufladbar ist, wobei alle Komponenten in Abhängigkeit von der für den Antrieb aus dem Puffer-Akkumulator benötigten Leistungsentnahme in ihrer konstruktiven, örtlichen und zeitlichen Auslegung aufeinander abgestimmt sind.

Elektrische Geräte für den Haushaltsbereich besitzen im allgemeinen einen hohen Energiebedarf und werden daher über das örtliche Niederspannungsnetz betrieben. Bei einigen Geräten. beispielsweise elektrisches Brotmesser oder Tischstaubsauger, reicht jedoch ein netzunabhängiger Batterie- oder Akkumulatorbetrieb für die Anwendung aus. Dabei müssen Einweg-Batterien in der Regel häufig gewechselt werden. Sie stellen damit eine umständliche und umweltbelastende, aber auch sehr teure Lösung dar. Die Energiekosten liegen ungefähr vier Größenordnungen höher als bei Netzstrombetrieb. Bei dem kostengünstigeren Akkumulatorbetrieb ist jedoch wiederum eine netzbetriebene Ladestation erforderlich, so dass die Netzunabhängigkeit beschränkt ist.

Der Einsatz von Solargeneratoren zur Speisung von elektrischen Verbrauchern setzt üblicherweise entweder hohe Lichtintensitäten, wie sie beispielsweise im Freien auftreten, oder einen äußerst geringen Energiebedarf des Verbrauchers voraus. In der Praxis wird daher auch bei der Akkupufferung davon ausgegangen, dass die Ausgangsleistung des Verbrauchers in etwa die gleiche Größenordnung hat wie die eingestrahlte Nennleistung des Solargenerators. Bei diesem Prinzip der "akkugepufferten Stromversorgung" wird also von einer Zeitgleichheit der Ent- und Aufiadungsintervalle für den Akkumulator ausgegangen, die nur durch einen sehr hohen Ladestrom mit entsprechender Überladungsfestigkeit des Akkus und Abschaltung bei Voilladung zu realisieren ist. Darüber hinaus wird hierbei zumeist von einer mittleren Lichtintensität im Bereich von 100 mW/cm² ausgegangen, wie sie nur bei direkter Sonneneinstrahlung vorzufinden ist.

Innerhalb von Räumen in Fensternähe rechnet man dagegen grob mit einer Lichtintensität von maximal 1 mW/cm². In diesem Bereich geben herkömmliche Solargeneratoren nur einen geringen Bruchteil ihrer Nenn-Spitzenleistung ab. Der Betrieb von elektrischen Geräten im Kleinstleistungsbereich einiger µW bis mW, beispielsweise Solaruhren, Taschenrechner, ist damit unproblematisch. Auch hier wird das Gerät nach dem Prinzip der akkugepufferten Stromversorgung betrieben. Oftmals arbeiten derartige Geräte sogar annähernd im sogenannten "Bereitschaftsparallelbetrieb", bei dem dem Puffermedium (Akku oder Kondensator) ständig Strom entnommen wird bei einer Stromeinspeisung von etwa 12 Stunden pro Tag.

Der Einsatz von Solarzellen für Anwendungen mit sogenannten "Indoor-Geräten", beispielsweise Küchengeräte, die normalerweise im Leistungsbereich von einigen 10 W bis 1000 W liegen, ist jedoch äußerst problematisch. Die entsprechenden Solarmodule müssten bei einem Wirkungsgrad von 10 % einschließlich Verlusten - sogar bei einer um Faktor 10 geringeren Leistungsabgabe - eine Fläche zwischen 2 m² und 200 m² aufweisen. Diese Umsetzung ist weder praktisch realisierbar, noch steht sie in einer vernünftigen Preis-Leistungsrelation.

Der **Stand der Technik**, von dem die Erfindung ausgeht, wird gebildet durch die **EP-A10 116 143.** Dieser Druckschrift ist die Beschreibung eines elektrischen Rasierapparates mit einer von einem Motor antreibbaren Schermechanik zu entnehmen. der mit einer Speichertrockenbatterie elektrisch verbunden ist. Diese ist mitteis Solarzellen. die auf dem Gehäuse angeordnet sind. wiederaufladbar. so dass der Rasierapparat vollständig netzunabhängig arbeiten kann Ein solcher Rasierapparat liegt in einer Leistungsklasse zwischen 1 W und 10 W und eignet sich daher vom Prinzip her für eine Ausrüstung mit Solarzellen. Die für den aus dieser Druckschrift bekannten Rasierapparat vorgesehene Stromversorgung erfolgt jedoch nach dem oben beschriebenen Prinzip der akkugepufferten Stromversorgung mit einer Leistungsgleichheit zwischen Verbraucher und Solargenerator bei Nennlichteinstrahlung. Der erforderliche Ladestrom ist dementsprechend hoch. In der offenbarten Berechnung liegt den rein rechnerisch ermittelten Werten für die erforderlichen Ladestrome und Ladeintervalle ein unrealistisches Denkmodell zugrunde. Dieses basiert auf dem Erfordernis zeitweiser voller Außen-Sonneneinstrahlung im Indoor-Bereich und der Vernachlässigung sämtlicher Wirkungsgrade und Verluste, die beispielsweise durch das Laden und Entladen des Speichermediums, dessen Selbstentiadung und durch den Füllfaktor der Solarzelle bei niedrigen Einstrahlstärken bedingt sind. Eine Berücksichtigung dieser Faktoren erforderte einen zumindest sechsfach größeren Solargenerator, der dann allerdings keinen Platz mehr auf dem Rasierapparat fände.

Im Gegensatz dazu wird in der **EP-A1 0 271 162** das Problem der niedrigen Beleuchtungsstärke innerhalb des Hauses berücksichtigt. In dieser Druckschrift ist eine Ladevorrichtung für mit Akkumulatoren betriebene kleine elektrische Haushaltsgeräte beschrieben, die mit Solarzellen ausgerüstet und in das Haushaltsgerät integriert ist. Bei bedecktem Himmel oder im Winter wird hierbei angenommen. dass die vom Solargenerator lieferbaren Ladeströme so klein werden. dass die von den Akkumulator-Herstellem angegebenen Mindestwerte des Ladestroms von etwa einem Dreißigstel der Akkumulator-Kapazität unterschritten werden. Dabei wird von einer Mindestkapazität von 600 mAh ausgegangen, weil bei kleineren Kapazitäten mit kleineren Ladestromen der Akkumulator ohne Zuladung zu schnell leer gefahren wäre. Die Ladevorrichtung weist deshalb einen Vorspeicher auf, in den ein Ladestrom, der aufgrund geringer Sonneneinstrahlung unterhalb des für erforderlich gehaltenen Mindestladestroms liegt, geladen wird. Beim Erreichen der Mindestladeleistung wird diese dann als Impuls auf den Akkumulator in Intervallen durchgeschaltet. Trotz dieser Maßnahme dient die aus dieser Druckschnft bekannte Versorgung mit Solarenergie nur zu Nachladezwecken, weshalb ein Netzanschluss fur eine Netzzuladung am jeweiligen Haushaltsgerät vorgesehen ist.

Ebenfalls nur zu Zuladungszwecken weist das aus der **EP-A1 0 271 162** bekannte kleine elektrische Haushaltsgerät einen Solargenerator auf. Dabei soll die Solarzellenfläche auf die Speicherkapazität der wiederaufladbaren Batterie ohne weitere Auslegungsangaben so abgestimmt sein. dass lediglich eine Verlängerung des Ladezyklus erreicht wird Dies ist bedeutsam, wenn ein Gerät nur in größeren Zeitabstanden an eine Netzspannung angeschlossen werden kann. Auch hierbei wird vom Prinzip der akkugepufferten Stromversorgung ausgegangen und deutlich herausgestellt, dass eine ausschließliche Solarenergieversorgung für die normalen Betriebsanforderungen eines kleinen elektrischen Haushaltsgerätes, wie beispielsweise ein Rasierapparat. als nicht ausreichend angesehen wird.

Aus der EP-A-0 390 253 ist eine mit Solarzellen und Netzanschluss ausgerüstete elektronische Ladevorrichtung für mit Akkumulatoren betriebene elektrische Geräte mit niedrigen Betriebsspannungen im Bereich von etwa 3 Volt bekannt, die über einen Energie-Vorspeicher, der parallel zu den Solarzellen geschaltet ist, intervallweise Energie einspeichert. Zur Vermeidung einer Rückentladung des Akkumulator in die Solarzelle weist die Ladevorrichtung eine einfache Sperrdiode auf, deren Verwendung bei derartigen Geräten üblich ist. Der Einsatz einer wertabhängigen Begrenzung für den Ladestrom ist in Verbindung mit derartigen Minimal-Solarsystemen nicht bekannt.

Weiterhin ist aus der DE-U1 83 35 334 ist ein Handmixgerät bekannt, das zum netzunabhängigen Betrieb einen Akkumulator aufweist, der über einen Netzanschluss im Gerät mittels eines entsprechenden Netzladegerätes wiederaufladbar ist. Eine Versorgung mit Solarenergie über einen Solargenerator ist bei diesem Kleinleistungs-Haushaltsgerät nicht vorgesehen.

Von der italienischen Firma **"Cordiess" srl - S. Matteo Della Decima (BO)** ist ein Kleinleistungs-Haushaltsgerät in Form eines Milchaufschäumers mit der Produktbezeichnung "Moca Crem" bekannt, mit dem Getränke. wie Kaffeecreme und Cappuccino, hergestellt werden können. Hierbei handelt es sich um ein kleines Gerät ungefähr in der Größe eines Handtellers mit einem zweigeteilten Kunststoffgehäuse und einem kleinen Stabquirl in Form einer Achse mit einem Wirbelrad. Im Gehäuse sind neben dem auf die Achse einwirkenden Antrieb zwei 1,5 Volt R 14-Zellen untergebracht, die nach ihrer Entladung durch neue Batterien ersetzt werden müssen. Als Betriebszeit des Quirls zur Herstellung der oben genannten Getränke mit aufgeschäumter Milch wird ein Intervall von 15 bis 20 Sekunden angegeben. Bei anderen Getränken mit löslichen Ausgangsprodukten und bei Mixspeisen sind nur wenige Sekunden Quirlzeit erforderlich.

Nach diesem Überblick über den Stand der Technik ist zusammenfassend festzustellen, dass bisher für den Fachmann der Einsatz von Solarzellen für Anwendungen mit Kleinleistungs-Haushaltsgeräten in einem Bereich zwischen 1 W und 1000 W mit vollständiger Netzunabhängigkeit ausgeschlossen erscheint. Dies resultiert aus einer zugrundegelegten Betriebsweise mit einer akkugepufferten Solarstromversorgung, bei der Verbraucher- und Solargeneratorleistung und damit Auf- sowie Entladeintervall des Akkumulators in etwa gleich groß sind. Die sich daraus ergebende Forderung nach einem hohen Ladestrom kann aufgrund der vorherrschend geringen Lichtintensitäten in Innenräumen, zumal bei bedecktem Himmel und unter Berücksichtigung aller auftretender Verluste, nur mit sehr großen Solarflächen erfüllt werden, die aber wiederum nicht in kleine Haushaltsgeräte integrierbar sind. Deswegen werden herkömmliche Geräte - in realisierbaren Ausführungsformen - entweder halbautark mit einer Netzzuladung oder ganz solarstromunabhängig mit Einweg-Batterien betrieben.

Das **technische Problem**, mit dem sich die Erfindung befasst. besteht deshalb darin. für ein netzanschlussloses Kleinleistungs-Haushaltsgerät der eingangs beschriebenen Art mit einem Leistungsbereich zwischen 1 W und 1000 W eine derartige Ausbildung der einzelnen Komponenten anzugeben, dass auch bei einer minimalen Sonneneinstrahlung eine vollständig autarke Energieversorgung mit Solarstrom unter Erzielung eines besonders guten Geräte-Wirkungsgrades sicher gewährleistet ist Dabei sollen die Gestaltungsmittel einfach und damit kostengünstig sein und die Handhabbarkeit des jeweilig ausgeführten Haushaltsgeräts nicht beeinträchtigen. Außerdem sollte weiterführend eine besondere Praktikabilität in Verbindung mit der Möglichkeit einer ansprechenden Formgestaltbarkeit angestrebt werden.

Die **erfindungsgemäße Lösung** für das technische Problem sieht daher die Merkmale des Anspruchs 1 vor.

Von wesentlicher Bedeutung fur die Erfindung ist der mit einer derartigen Konzeption umsetzbare Modus für die Versorgung des Akkumulators mit Solarstrom. Im Gegensatz zu dem bekannten Prinzip der "akkugepufferten Solarstromversorgung" handelt es sich bei der Erfindung um ein Prinzip der "wasserfallartigen Solarstromversorgung" Bei einer derartigen Stromversorgung wird der Akkumulator über einen relativ langen Zeitraum mit einem äußerst geringen Ladestrom. wie er eben auch bei einer minimalen Lichteinstrahlung von 1 mW/cm² von einem auf einem Haushaltsgerät angeordneten Solargenerator ohne weiteres erbracht werden kann. auf einen Mindestwert der Kapazität geladen. Diese gespeicherte Energie steht dann jedoch wasserfallartig in einem relativ kurzen Entladeintervall von nur ungefähr einem Tausendstel der Aufladedauer durch den hochstromfähigen Akkumulator vollständig zu Verfügung. Dadurch kann die Ausgangsleistung des Verbrauchers zwei bis drei Größenordnungen höher liegen als die Nennleistung des Solargenerators bei minimalen Umgebungsbedingungen. Bei dem Verhältnis von Aufladedauer zu Entladedauer als Betriebszeit des Gerätes von etwa 1000 : 1 bedeutet dies bei einer Aufladedauer von ungefähr 10 Stunden unter minimalen Lichtverhältnissen eine Betriebsdauer von 36 Sekunden. Bei einem großzügig angenommenen Gesamt-Energieverlust von 70 % durch Ladeanpassung und elektrochemische Vorgänge im Speichermedium ergibt sich daraus ein Verhältnis von etwa 1 : 300 für Ladeleistung zu Betriebsleistung.

Die neue Konzeption der "wasserfallartigen Solarstromversorgung" bei dem erfindungsgemäßen Kleinieistungs-Haushaltsgerät gewährleistet damit unabhängig von der gerade herrschenden Lichtintensität zu jedem Zeitpunkt dessen vollständige Unabhängigkeit vom örtlichen Niederspannungsnetz. Gerade für Anwendungen innerhalb des Hauses kommt dieser Konzeption überall dort eine große Bedeutung zu, wo das Anwendungsintervall des Verbrauchers relativ kurz im Vergleich zu seinem Ruheintervall ist. Kleine elektrisch betreibbare Haushaltsgeräte. wie Kleinmixer. Dosenöffner, Kräuter- und Pfeffermuhlen. Tischstaubsauger. Käsereiben und Korkenzieher, seien an dieser Stelle beispielhaft genannt.

Das erfindungsgemaße Kleinleistungs-Haushaltsgerät arbeitet mit der angenommenen Lichtintensitat im untersten Bereich der Auslegung eines solarstromgespeisten Puffer-Akkumulators fast am Rande der Zweckentfremdung. Schon eine derartige Auslegung ist bislang vom Fachmann nicht als realisierbar angesehen worden. Um die untere Grenzschwelle der Realisierbarkeit keinesfalls zu unterschreiten, ist eine besonders sorgfältige und genaue Abstimmung der einzelnen Komponenten aufeinander erforderlich. Dabei sind insbesondere beim Solarmodul auf dessen Wirkungsgrad und Flache. beim Puffer-Akkumulator auf dessen Kapazität, Selbstentladung Hochstromfahigkeit und Entladewirkungsgrad, bei der Ladeelektronik auf ihre Verluste, beim Bewegungsmodul mit Antrieb auf deren Wirkungsgrad, Wirkungsweise und Drehzahl sowie beim Aufstellungsort auf die Lichtintensität zu achten

Dabei ist bei der Realisierung des Konzepts ein maßgeblicher Aspekt des erfindungsgemäßen Kieinleistungs-Haushaltsgeräts zu beachten, nämlich die Begrenzung der Ladekapazität des Puffer-Akkumulators bei etwa 80 % - 60 % seiner Nennkapazität je nach einer Temperatur von 20°C bis 30°C. Hierdurch hat zum einen der auf die Strommenge bezogene Ladewirkungsgrad im Bereich der eingeladenen Strommenge 0...70% bei Raumtemperatur einen Wert von nahezu 1 (oberhalb 70 % sinkt er auf 0,8..0,7 ab). Zum anderen ist der Verlauf der Selbstentladung in diesem Bereich deutlich flacher als oberhalb 70 %. Bei Ladeströmen oberhalb 0.05 CA erfolgt darüber hinaus ab etwa 70 % Ladung ein Druck- und Temperaturanstieg innerhalb der hermetisch abgeschlossenen Zelle. Dieser Druckanstieg wird bei NiCd-Akkus durch die Cd(OH)₂ - Ladereserve an der negativen Cd-Elektrode in gewissen Grenzen kompensiert und führt beispielsweise bei NiCd-Knopfzellen der Firma Varta zu einem maximalen Dauerladestrom von etwa 0.05 CA. Alle drei genannten Vorteile lassen sich auf die Sauerstoffentwicklung an der positiven Ni-Elektrode beim Ladeprozess zuruckführen. die bei Raumtemperatur erst ab etwa 70 % der eingeladenen Kapazität beginnt. Zur weiteren Ladung ist ab diesem Punkt eine um etwa 0,1 V höhere Ladespannung erforderlich, um den Ladeprozess mit der gleichen Geschwindigkeit fortsetzen zu können, was ebenfalls zu einer Erniedrigung des Ladewirkungsgrades bezogen auf die Energiemenge führt. Diese Ausführungen erklären einerseits, warum eine Teilladung des Puffer-Akkumulators bis zu 70 % so sinnvoll ist, und andererseits, warum Ladeströme im Bereich von 0,001 CA tatsächlich zur Ladung ausreichen. In allen hier bekannten Beschreibungen von Ladeanordnungen mit NiCd- oder NiMH-Akkus wird von einer Vollladung und den entsprechenden Lade-bzw. Erhaitungsladeströmen ausgegangen.

Ein anderer maßgeblicher Aspekt für die Realisierbarkeit des erfindungsgemäßen Kleinleistungs-Haushaltsgeräts ist sein Aufstellungsort zum Empfang der Mindestlichtleistung. Hierfür ist es gemäß einer Ausgestaltung der Erfindung besonders vorteilhaft, wenn für seine direkte Platzierbarkeit vor einer Fensterscheibe am Gerätegehäuse auf der Seite des Bewegungsmoduls eine Öse vorgesehen ist, mit der das Gerät an einen unmittelbar auf der Fensterscheibe aufgebrachten Haken anhängbar ist, wobei die Öse so ausgebildet und am Gehäuse angeordnet ist, dass ein für die Lichteinstrahlung günstiger Anstellwinkel zwischen dem Solargenerator und der Fensterscheibe erzielbar ist. Dieser Winkel beträgt idealerweise ca. 45° bei diffusem Licht und ca. 30° bis 50° bei direkter Sonneneinstrahlung. Bei den realisierbaren Abmessungen des Geräts und einem nicht zu weit von der Fensterscheibe abstehenden Haken. beispielsweise ein Saugnapf, ist jedoch auch ein hiermit erreichbarer Anstellwinkel von ca. 10° gegenüber einer ungewinkelten Aufstellung noch von großem Vorteil. Bei einer derartigen Anordnung der Öse zeigt das Bewegungsmodul in aufgehängtem Zustand nach oben.

Nach einer anderen Ausfuhrungsvariante der Erfindung kann auch vorgesehen sein. dass für die direkte Platzierbarkeit vor einer Fensterscheibe am Gerätegehäuse an der dem Bewegungsmodul gegenüberliegenden Seite ein zwischen zwei Anschlägen verschwenkbarer Bügel vorgesehen ist, mit dem je nach Schwenkstellung das Gerät entweder an einen unmittelbar auf der Fensterscheibe aufgebrachten Haken anhängbar oder auf der Fensterbank aufstellbar ist, wobei der Bügel so ausgebildet und am Gehäuse angeordnet ist. dass in beiden Schwenkstellungen ein für die Lichteinstrahlung gunstiger Anstellwinkel zwischen dem Solargenerator und der Fensterscheibe erzielbar ist Von besonderem Vorteil ist hierbei die gleichzeitige Aufstellmöglichkeit auf der Fensterbank, wenn eine direkte Platzierung am Fenster nicht gewünscht ist. in aufgehängtem Zustand zeigt bei dieser Variante das Bewegungsmodul nach unten. Gerade im Hinblick auf eine aneinandergereihte Anordnung mehrerer verschiedener erfindungsgemäßer Haushaltsgeräte ergibt sich hierdurch ein optisch besonders ansprechendes Bild.

Eine besonders sinnvolle Ausführung des erfindungsgemäßen Haushaltsgeräts ist aus den weiter oben genannten Gründen in einer Ausgestaltung als Aufschäumgerät für flüssige Milchprodukte zu sehen. Hierbei ist es besonders vorteilhaft, wenn nach einer anderen Ausgestaltung der Erfindung das Bewegungsmodul ein Wirbelrad mit einem hohen Verwirbelungsgrad aufweist, das auf einer mit einem hochtourig drehenden, funkentstörten Gleichstrommotor als Antrieb verbundenen Edelstahlachse angeordnet ist. Aufschäumgeräte weisen die für Erfindung ideale Betriebszeit von einigen Sekunden bis zu einer halben Minute auf. Ein hoher Verwirbeluhgsgrad wird durch eine hohe Tangentialgeschwindigkeit und einen großen Anstellwinkel der propellerartigen Schaufelräder des Wirbelrades erzielt. Ähnlich dem Prinzip der Seifenblasenbildung wird durch die turbulente Strömung um das mit einer hohen Drehzahl im Bereich von etwa 8000 U/min rotierende Wirbelrad Luft in dem umgebenden Medium eingeschlossen und damit eine Schaumbildung verursacht. Die Stabilität und die mittlere Größe der gebildeten Blasen hängt dabei von der Viskosität des Mediums ab, die bei Milchprodukten unter anderem von der Temperatur und dem Fettgehalt bestimmt wird. Bei Verwendung einer solchen Verwirbelungsmaschine mit hohem energetischen Wirkungsgrad wird beispielsweise das Aufschäumen von 0.2 I heißer Vollmilch in etwa 15 s bei einer mittleren Leistung von 1 W ermöglicht.

Eine spezielle Gestaltung der Schaufelräder kann darüber hinaus ein Herausspritzen der aufzuschäumenden Flüssigkeit aus dem Gefäß verhindern. Nach einer weiteren Erfindungsausgestaltung für eine Ausführung als Aufschäumgerät für flüssige Milchprodukte kann vorteilhaft zwischen dem Wirbelrad und dem Gerätegehäuse ein auf der Edelstahlachse längs verschiebbarer Spritzschutz angeordnet ist, Eine Veränderung der Position des beispielsweise als rotationssymmetrische Scheibe ausgebildeten Spritzschutzes auf der Achse ist sinnvoll, da bei abnehmender Distanz zum Wirbelrad die Schaumbildung verringert wird. Diese Distanz sollte daher je nach Gefäßhöhe auf einen maximalen Wert eingestellt sein.

Im Hinblick auf die genaue Abstimmung der einzelnen Komponenten des erfindungsgemäßen Haushaltsgeräts ist für deren Funktionsfähigkeit sicherzustellen, dass ein Betrieb immer innerhalb der erlaubten Grenzen stattfindet. Der gesamte Ladevorgang wird dafür von einer Ladeelektronik gesteuert. Nach einer anderen Ausgestaltung des erfindungsgemäßen Geräts ist es dazu sinnvoll. wenn dre Ladeelektronik Mittel zur Ladestrombegrenzung und zur Verhinderung der Entladung des Puffer-Akkumulators über den Solargenerator aufweist. Derartige. an sich bekannte Mittel sind im vorliegenden Fall genau an die gestellten Anforderungen anzupassen.

Als weitere vorteilhafte Ausfuhrungsform der Erfindung ist eine Umsetzung der Komponenten beschneben. bei der der Solargenerator derart aus kristallinen Silizium-Solarzellen aufgebaut ist. dass bei der Mindest-Lichtintensität von 1 mW/ cm² eine Photospannung zur Erreichung eines minimalen Ladestroms von 0,6 mA erzeugbar ist. und dass der Puffer-Akkumulator als hochstromfähige NiCd-Zelle mit einer Kapazität im Bereich von 150 mAh - 200 mAh und einem Selbstentladeverlust von weniger als 1 % bei Raumtemperatur pro Tag ausgeführt ist Weitere Einzelheiten zu den Berechnungen sind zur Vermeidung von Wiederholungen dem speziellen Beschreibungsteil zu entnehmen.

Ausbildungsformen der Erfindung werden nachfolgend anhand der schematischen Figuren näher erläutert. Dabei zeigt:
- **Figur 1**: ein Lade-/Entiadediagramm fur das bekannte Prinzip der akkugepufferten Solarstromversorgung (Stand der Technik),
- **Figur 2**: ein Lade-/Entiadediagramm für das bei der Erfindung realisierte Prinzip der wasserfallartigen Stromversorgung,
- **Figur 3**: ein Prinzipschaltbild der elektrischen Komponenten des erfindungsgemäßen Kleinleistungs-Haushaltsgerätes,
- **Figur 4**: eine erste Ausführungsform eines als Milchaufschäumer ausgebildeten erfindungsgemäßen Kleinleistungs-Haushaltsgerätes in der Drauf- und Rücksicht,
- **Figur 5**: die erste Ausführungsform im Querschnitt in aufgehängter Ladeposition.
- **Figur 6**: eine zweite Ausführungsform eines als Milchaufschäumer ausgebildeten erfindungsgemäßen Kleinleistungs-Haushaltsgerätes in der Draufsicht,
- **Figur 7**: die zweite Ausführungsform im Querschnitt in aufgehängter Ladeposition und
- **Figur 8**: die zweite Ausführungsform im Querschnitt in aufgestellter Ladeposition.

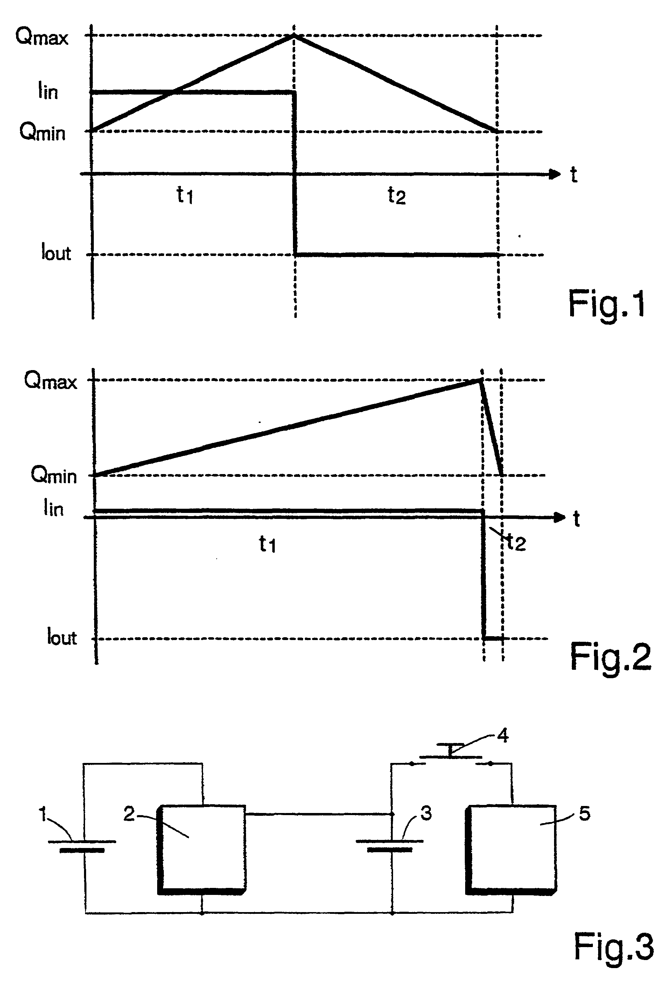

In **Figur 1** ist das Lade-/Entladediagramm für herkömmliche Kleinleistungs-Haushaltsgeräte mit Solarstromversorgung dargestellt. Die Aufladung des Pufferakkus von einem minimalen Ladezustand **Q**_{**min**} bis zu einer maximalen Ladung **Q**_{**max**} erfolgt über einen Zeitraum **t**_{**1**} mit einem relativ hohen Eingangsstrom **I**_{**in**}. Die Entladung erfolgt dann in einem mit **t**_{**1**} in etwa übereinstimmenden Zeitraum **t**_{**2**} mit einem gemäßigten Ausgangsstrom **I**_{**out**}. Die Optimierung der einzelnen Komponenten erfolgt also beim Stand der Technik für hohe Eingangsströme und lange Entladungsintervalle in der Größenordnung der Aufladungsintervalle.

Als relevante Größen für die Berechnung von Solargenerator und Akku im **Stand der Technik** sind anzugeben :
- Nennleistung des Solargenerators : **P**_{**N**} **= U**_{**N**} **· I**_{**N**} **bei P'**_{**100**} mit einer Lichtintensität **P'** von 100 mW/cm²
- Ausgangsleistung des Verbrauchers **P**_{**out**} in etwa gleiche Größenordnung wie **P**_{**N**} (1 W - 1000 W)
- Kapazität des Akkus **C > I**_{**out.max**} **· t**_{**2.max**} in Ah
- Überladungsfestigkeit des Akkus gegenüber **I**_{**in,max**} bzw. Ladeelektronik mit Abschaltung bei Vollladung.

In der **Figur 2** dagegen ist das Lade-/Entladediagramm für ein Haushaltsgerät nach der Erfindung dargestellt, das nach dem neuen Prinzip der wasserfailartigen Solarstromversorgung mit Strom versorgt wird. Ausgehend von denselben Ladezuständen **Q**_{**min**} und **Q**_{**max**} wie bei einem herkömmlichen Gerät ist hierbei die Ladedauer **t**_{**1**} bei einem extrem niedrigen Eingangsstrom **I**_{**in**} sehr viel länger als die Entladedauer **t**_{**2**}, ein Verhältnis von ungefähr 1000 : 1 wird angestrebt. Im Entladeintervall **t**_{**2**} fließt die Ladung dann mit einem sehr hohen Ausgangsstrom **I**_{**out**} zum Verbraucher, was durch die Hochstromfestigkeit des Akkus bei der Erfindung ermöglicht wird. Die Optimierung der einzelnen Komponenten erfolgt also bei der Erfindung für sehr niedrige Eingangsströme und sehr kurze Entladungsintervalle in der Größenordnung von einem Tausendstel der Aufladungsintervalle.

Als relevante Größen für die Berechnung von Solargenerator und Akku bei der **Erfindung** sind anzugeben :
- Nennleistung des Solargenerators : **P**_{**N.min**} **= U**_{**N.min**} **· I**_{**N.min**} bei **P'**_{**min**} **= P'**_{**1**} mit einer Lichtintensität **P'** von 1 mW/cm² bei einem Spektrum etwa AM 1,5
- Ausgangsleistung des Verbrauchers **P**_{**out.max**} (1 W - 1000 W) etwa zwei bis drei Größenordnungen höher als **P**_{**N.min**}
- Hochstromfähigkeit des Akkus **I**_{**out.max**} > 2 · CA
- Selbstentladestrom des Akkus **< 0,2 I**_{**N.min**}

**Bemerkung** : Die Größe **CA** ist dabei eine von den Akku-Herstellern eingeführte Größe und entspricht der in Ah angegebenen Kapazität des Akkus in A (z.B. C = 200 mAh **→** 1 CA = 200 mA).

Der **Figur 3** ist das Prinzipschaltbild der elektrischen Komponenten des erfindungsgemäßen Kleinleistungs-Haushaltsgeräts zu entnehmen, anhand dessen auch ein Zahlenbeispiel für die Auslegung erläutert wird. Ein Solargenerator **1**, der beispielsweise aus kristallinen Silizium-Solarzellen mit einem Wirkungsgrad von mindestens 14% besteht, lädt über eine Ladeelektronik **2** einen Puffer-Akkumulator **3**, z.B einen NiCd-Akku in Form einer Knopfzelie. Die Ladeelektronik **2** sorgt für eine Begrenzung des Ladestroms auf den für den verwendeten Akku **3** vom Hersteller angegebenen maximalen Dauerladestrom und verhindert gleichzeitig eine Entladung des Akkus **3** über den Solargenerator **1**. Dieser ist im gewählten Beispiel so ausgelegt, dass er bei einer Mindest-Lichtintensität von 1 mW/cm² (Spektrum ähnlich AM 1,5) noch genügend Photospannung erzeugt, um einen Strom von mindestens 0,6 Ah für die Akkuladung zu liefern. Bei 10 h Ladung ergibt sich somit eine eingespeicherte Kapazität von 5,4 mAh bei einem Ladewirkungsgrad von 90 %. Die Kapazität des NiCd-Akkus 3 liegt im Beispiel bei 200 mAh, die Selbstentiadung bei weniger als 1 % pro Tag bei Raumtemperatur. Bei Betätigung eines Tasters **4**, der niedrige Kontaktwiderstände besitzt, wird der NiCd-Akku **3** von mehr als 2 mAh durch einen funkentstörten Gleichstrommotor **5** als Antrieb für das Bewegungsmodul entladen. Die Belastung des hochstromfähigen NiCd-Akkus 3 von im Mittel 300 mA führt zu einem Entladewirkungsgrad von etwa 60 %. Unter Berücksichtigung des Verlustes durch Selbstentladung erhält man so eine entnehmbare Kapazität von mehr als 1,3 mAh pro Tag bei der angenommenen Mindest-Lichtintensität. Damit lässt sich das erfindungsgemäße Gerät etwa 25 s betreiben, was für viele Anwendungen bereits ausreicht.

Der Aufstellungsort des erfindungsgemäßen Gerätes spielt eine entscheidende Rolle für seine Funktionstüchtigkeit. Die oben angegebenen Werte gelten für seine direkte Platzierbarkeit vor eine Fensterscheibe bei bewölktem Himmel. Sie können in den Wintermonaten Dezember und Januar bei Breitengraden von Norddeutschland sogar noch leicht unterschritten werden. Über einen längeren Zeitraum gemittelt erzielt man jedoch an Fenstern ohne direkte Sonneneinstrahlung (z.B. Nordseite oder abgeschattetes Fenster) trotzdem zwei- bis viermal höhere Werte für die eingestrahlte Energiemenge (ca. 20 - 40 mWh/cm² und Tag) als oben im ungünstigsten Fall angenommen. Die Ursache hierfür liegt darin, dass bereits ein einziger Sonnentag die fünf- bis zehnfache Energiemenge eines trüben Tages erbringt. Aufgrund der ausreichend hohen Kapazität des im Beispiel gewählten Akkus **3** steht bei angegebenen Mindest-Lichtintensität und zwei Anwendungen am Tag noch nach etwa einem Monat ungefähr die halbe Kapazität zur Verfügung, wodurch eine Mittelung der eingestrahlten Energiemenge über diesen Zeitraum als Berechnungsgrundlage auch genommen werden kann.

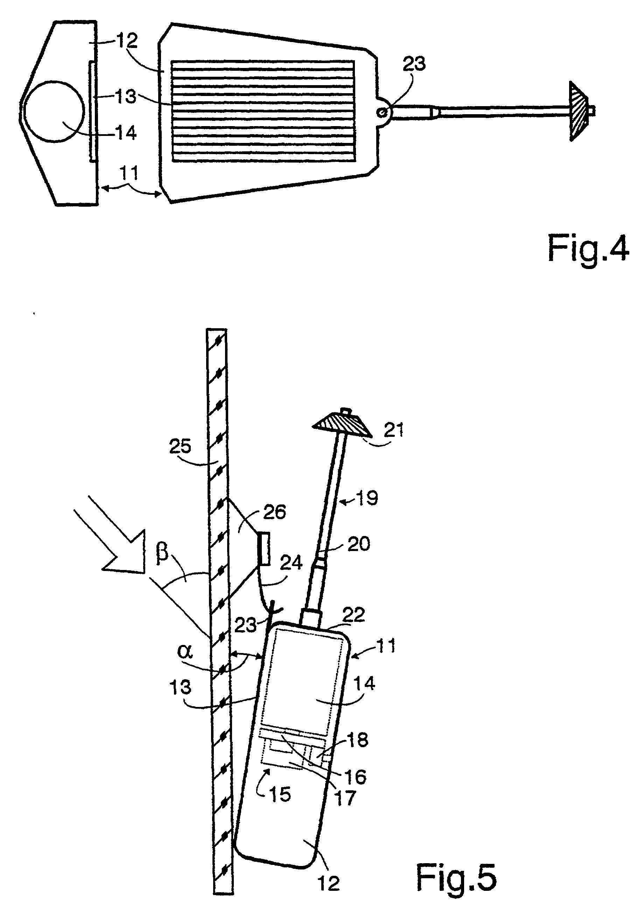

In Figur 4 ist eine erste Ausführungsform als Milchaufschäumer 11 in der Drauf- und Rücksicht, in Figur 5 im Querschnitt in aufgehängter Ladeposition dargestellt. In ein Kunststoffgehäuse 12 ist ein flächiger Solargenerator 13 der oben beschriebenen Art integriert Dieser ist auf seiner Oberfläche gegen Beschädigungen bei der Handhabung des Milchaufschäumers 11 in nicht näher dargestellter Weise sicher geschützt. Eine Anordnung auf dem Gehäuse 12 ist natürlich auch möglich und soll unter den Begriff der "Integration" fallen. Die Anordnung eines Gleichstrommotors 14 und einer Ladeelektronikeinheit 15, welche neben den ladestrom-steuernden Bauelementen 16 auch einen Akkumulator 17 und einen durch das Gehäuse 12 hindurchgeführten Taster 18 enthält, ist auf größtmögliche Kompaktheit und einfache Montage im Kunststoffgehäuse **12** ausgelegt. Es weist deshalb entsprechende Ausbuchtungen und Abkantungen auf. Ein Bewegungsmodul **19** des Milchaufschäumers **11** weist eine mit dem Gleichstrommotor **14** verbundene Edelstahlachse **20** und ein Wirbelrad **21** auf.

Da die oben genannten Werte nur direkt an einem Fenster erzielbar sind, sollte das erfindungsgemäße Gerät auch dort definiert aufbewahrbar sein. An einer dem Bewegungsmodul **19** zugeordneten Seite **22** des Gehäuses **12** ist deshalb eine Öse **23** vorgesehen, mit der der Milchaufschäumer **11** an einen Haken **24** eines an einer Fensterscheibe **25** angebrachten Saugnapfes **26** anhängbar ist. Es ergibt sich dabei ein günstiger Anstellwinkel α von ca. 10° gegenüber der Fensterscheibe **25**, so dass Tageslicht in einem Winkel β zwischen 40° und 60° günstig in den Solargenerator **1** einfallen kann. Im aufgehängten Zustand zeigt das Bewegungsmodul **19** des Milchaufschäumers **11** nach oben. Der Haken **24** kann beispielsweise auch Teil einer die Fensterscheibe **25** überspannenden und am Fensterrahmen angebrachten Leiste sein und so mit weiteren Haken zusammen der Aufhängung weiterer Küchengeräte nach der Erfindung dienen.

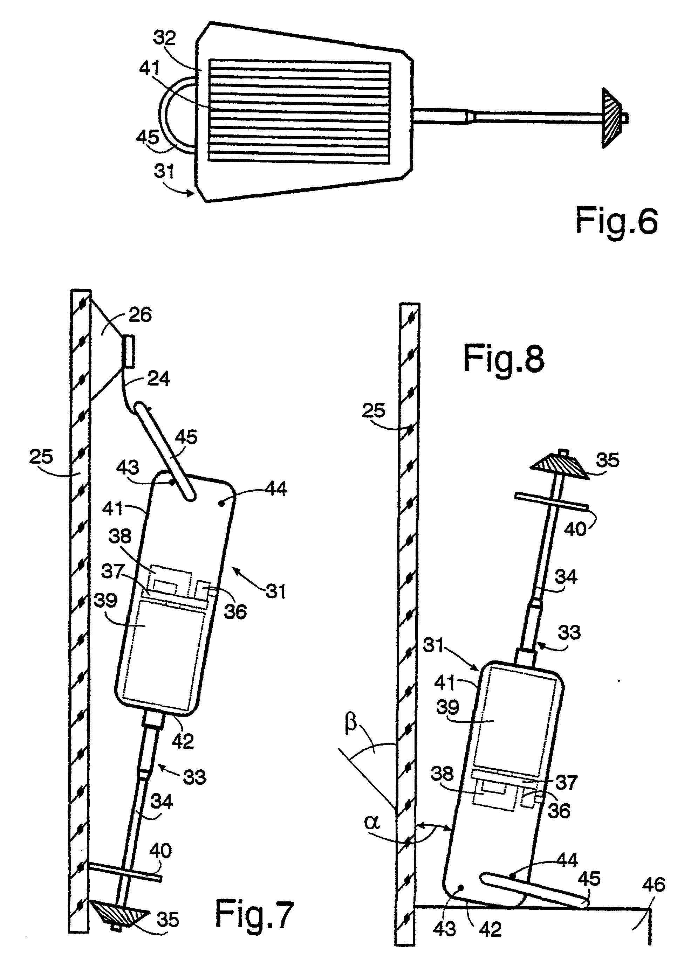

Der **Figur 6** ist eine zweite Ausführungsform als Milchaufschäumer **31** in der Draufsicht, der **Figur 7** im Querschnitt in aufgehängter Ladeposition und alternativ dazu der **Figur 8** in aufgestellter Ladeposition zu entnehmen. Der Milchaufschäumer **31** weist ein Edelstahlgehäuse **32** mit einem Bewegungsmodul **33** aus einer Edelstahlachse **34** und einem Kunststoff-Wirbelrad **35** und einem Taster **36** auf. Dieser ist Teil einer Ladeelektronikeinheit **37**, die außerdem unter anderem einen Akku **38** enthält und mit einem Motor **39** elektrisch verbunden ist. Auf der Edelstahlachse **34** ist ein längs verschiebbarer Spritzschutz **40** in Form einer rotationssymmetrischen Kunststoffscheibe angebracht. Der Spritzschutz **40** sollte einen an die Gefäßhöhe und den Flankenwinkel des Wirbelrades **35** angepassten Abstand zum Edelstahlgehäuse **32** haben. Bei anderen Ausführungsformen von Wirbeirädern kann der Spritzschutz entfallen. Auf dem Edelstahlgehäuse **32** ist ein Solarmodul **41** aus kristallinen Silizium-Solarzellen angeordnet. Eine Ausführung mit CdTe- oder anderen neuartigen Solarzellen ist ebenfalls möglich.

An einer vom Bewegungsmodul **33** abgewandten Seite **42** weist der Milchaufschäumer **31** einen zwischen zwei Anschlägen **43, 44** verschwenkbaren Bügel **45** auf. Mit diesem ist der Milchaufschäumer **31** entweder in der einen Schwenkstellung a in der oben beschriebenen Weise an einen Haken aufhängbar oder in der anderen Schwenkstellung b auf einer Fensterbank **46** aufstellbar. In aufgehängten Zustand zeigt das Bewegungsmodul **33** bei dieser Ausführungsvariante dann nach unten.

Bei den beschriebenen Milchaufschäumern als Ausführungsformen des erfindungsgemäßen Kleinleistungs-Haushaltsgerätes handelt es sich um handliche und praktische, darüber hinaus jedoch auch besonders kostengünstige Geräte. Eine Verwendung als Werbegeschenke scheint deshalb besonders gegeben. Gerade im Hinblick auf die innovative eingesetzte Technik scheint hier der Werbemarkt beispielsweise für Solarzellen-Hersteller oder wissenschaftliche Institute mit einer Werbemöglichkeit auf dem Gehäuse besonders groß zu sein.

## Patentansprüche

1. Netzanschlussloses Kleinleistungs-Haushaltsgerät (11, 31) mit einem elektrisch antreibbaren Bewegungsmodul (19, 33) und einem den Antrieb (5, 14, 39) speisenden geräteinternen Puffer-Akkumulator (3, 17, 38), der über einen im Gerätegehäuse (12, 32) integrierten, der Sonneneinstrahlung auszusetzenden Solargenerator (1, 13, 41) unter Kontrolle einer Ladeelektronik (15, 37) wiederaufladbar ist, wobei alle Komponenten in Abhängigkeit von der für den Antrieb (5, 14, 39) aus dem Puffer-Akkumulator (3, 17, 38) benötigten Leistungsentnahme in ihrer konstruktiven, örtlichen und zeitlichen Auslegung aufeinander abgestimmt sind,
**dadurch gekennzeichnet, dass**
die Auslegung des Bewegungsmoduls (19, 33) in Abhängigkeit von der Ausbildung des Solargenerators (1, 13, 41) nach dem für seine Berechnung relevanten Parameter der Nennleistung bei dessen direkter Platzierbarkeit innerhalb des Hauses vor einer Fensterscheibe (25) bei einer eingestrahlten Mindest-Lichtintensität im Bereich von 1 mW/cm² so erfolgt ist, **dass** für eine Betriebsdauer des Antriebs (5, 14, 39) im Bereich von einem Tausendstel der Wiederaufladedauer des Puffer-Akkumulators (3, 17, 38) die Leistungsentnahme im Bereich des Hundert- bis Tausendfachen der minimalen Leistungsabgabe des Solargenerators (1, 13, 41) liegt, wobei der Puffer-Akkumulator (3, 17, 38) hochstromfest ausgeführt und in einem durch die Ladeelektronik (15,37) auf maximal 70% seiner Nennkapazität begrenzten Nutzungsbereich zur Erzielung eines nahezu maximalen Ladewirkungsgrades und eines flachen Selbstentladungsverlaufs mit einem zumindest minimalen Ladestrom im Bereich des Fünffachen seines Erhaltungsladestroms bei einer minimalen Ladedauer im Bereich von 10 h/Tag wiederaufladbar ist.

2. Netzanschlussloses Kleinleistungs-Haushaltsgerät nach Anspruch 1,
**dadurch gekennzeichnet, dass**
für die direkte Platzierbarkeit vor einer Fensterscheibe (25) am Gerätegehäuse (12) auf der Seite (22) des Bewegungsmoduls (19) eine Öse (23) vorgesehen ist, mit der das Gerät an einen unmittelbar auf der Fensterscheibe (25) aufgebrachten Haken (24) anhängbar ist, wobei die Öse (23) so ausgebildet und am Gehäuse (12) angeordnet ist, dass ein für die Lichteinstrahlung (β) günstiger Anstellwinkel (α) zwischen dem Solargenerator (13) und der Fensterscheibe (25) erzielbar ist.

3. Netzanschlussloses Kleinleistungs-Haushaltsgerät nach Anspruch 1,
**dadurch gekennzeichnet, dass**
für die direkte Platzierbarkeit vor einer Fensterscheibe (25) am Gerätegehäuse (32) an der dem Bewegungsmodul (33) gegenüberliegenden Seite (42) ein zwischen zwei Anschlägen (43, 44) verschwenkbarer Bügel (45) vorgesehen ist. mit dem je nach Schwenkstellung (a, b) das Gerät entweder an einen unmittelbar auf der Fensterscheibe (25) aufgebrachten Haken (24) anhängbar oder auf der Fensterbank (46) aufstellbar ist, wobei der Bügel (45) so ausgebildet und am Gehäuse (32) angeordnet ist, **dass** in beiden Schwenkstellungen (a, b) ein für die Lichteinstrahlung (β) günstiger Anstellwinkel (α) zwischen dem Solargenerator (41) und der Fensterscheibe (25) erzielbar ist.

4. Netzanschlussloses Kleinleistungs-Haushaltsgerät nach einem der vorangehenden Ansprüche 1 bis 3,
**dadurch gekennzeichnet, dass**
für eine Ausführung als Aufschäumgerät (11. 31) für flüssige Milchprodukte das Bewegungsmodul (19, 33) ein Wirbeirad (21, 35) mit einem hohen Verwirbelungsgrad aufweist, das auf einer mit einem hochtourig drehenden, funkentstörten Gleichstrommotor (14, 39) als Antrieb verbundenen Edelstahlachse (20, 34) angeordnet ist.

5. Netzanschlussloses Kleinleistungs-Haushaltsgerät nach einem der vorangehenden Ansprüche 1 bis 4,
**dadurch gekennzeichnet, dass**
für eine Ausführung als Aufschäumgerät (31) für flüssige Milchprodukte zwischen dem Wirbelrad (35) und dem Gerätegehäuse (32) ein auf der Edelstahlachse (34) längs verschiebbarer Spritzschutz (40) angeordnet ist.

6. Netzanschlussloses Kleinleistungs-Haushaitsgerät nach einem der vorangehenden Ansprüche 1 bis 5,
**dadurch gekennzeichnet, dass**
die Ladeelektronik (2, 15, 37) Mittel zur Ladestrombegrenzung und zur Verhinderung der Entladung des Puffer-Akkumulators (3, 17, 38) über den Solargenerator (1, 13, 41) aufweist.

7. Netzanschlussloses Kleinleistungs-Haushaltsgerät nach einem der vorangehenden Ansprüche 1 bis 6,
**dadurch gekennzeichnet, dass**
der Solargenerator (1, 13, 41) derart aus kristallinen Silizium-Solarzellen aufgebaut ist, **dass** bei der Mindest-Lichtintensität von 1 mW/ cm² eine Photospannung zur Erreichung eines minimalen Ladestroms von 0,6 mA erzeugbar ist, und dass der Puffer-Akkumulator (3, 17, 38) als hochstromfähige NiCd-Zelle mit einer Kapazität im Bereich von 150 mAh - 200 mAh und einem Selbstentladeveriust von weniger als 1 % bei Raumtemperatur pro Tag ausgeführt ist.

## Claims

1. Low-power household appliance unconnected to mains (11, 31) with an electrically propellable motion module (19, 33) and a buffer battery (3, 17, 38) in the appliance feeding the drive (5, 14, 39) which is rechargeable via a solar generator (1, 13, 41) integrated in the appliance casing (12, 32) to be exposed to solar radiation under the control of an electronic charger (15, 37), whereby all components are matched to one another in their constructive, local and temporal layout dependent on the required power drain from the buffer battery (3, 17, 38) for the drive (5, 14, 39)
**characterized by the fact that**
the motion module (19, 33) has been so designed in dependence on the parameters of the solar generator (1, 13, 41) in accordance with the parameters of rated power relevant for its calculation when it can be placed directly inside a house in front of a window-pane (25) with an irradiated minimum luminous intensity in the range of 1 mW/cm² that for an operating time of the drive (5, 14, 39) in the range of one thousandth of the recharging time of the buffer battery (3, 17, 38) the power drain is in the range of a hundred to a thousand times the minimum power output of the solar generator (1, 13, 41), whereby the buffer battery (3, 17, 38) is designed to be high current resistant and to be rechargeable within an area of application limited by the electronic charger (15, 37) to a maximum of 70% of its rated capacity for achieving almost a maximum charging efficiency and a shallow course of spontaneous discharge with at least a minimum charging current in the range of five times its float charge current at a minimum charging time in the range of 10 h/day.

2. Low-power household appliance unconnected to mains as in Claim 1,
**characterized by the fact that**
for direct placement in front of a window-pane (25) there is provision for an loop (23) on the appliance casing (12) on the side (22) with the motion module (19) with which the appliance can be suspended from a hook (24) attached directly to the window-pane (25), whereby the loop (23) is designed and placed on the casing (12) in such a way that a favourable angle of incidence (α) for incident light radiation (β) between the solar generator (13) and the window-pane (25) can be achieved.

3. Low-power household appliance unconnected to mains as in Claim 1,
**characterized by the fact that**
for direct placement in front of a window-pane (25) there is provision for a shackle (45) on the appliance casing (32) on the side (42) opposite to the motion module (33) that can be swivelled between two stops (43, 44) with which, depending on the swivel position (a,b), the appliance can be either suspended from a hook (24) attached directly to the window-pane (25) or placed on the window-sill (46), whereby the shackle (45) is designed and placed on the casing (32) in such a way that in both swivel positions (a, b) a favourable angle of incidence (α) for incident light radiation (β) between the solar generator (41) and the window-pane (25) can be achieved.

4. Low-power household appliance unconnected to mains corresponding to one of the above Claims 1 to 3,
**characterized by the fact that**
in the implementation as a foaming appliance (11, 31) for liquid milk products the motion module (19, 33) has a swirl wheel (21, 35) with a high swirl rate which is placed on a stainless steel rotating shaft (20, 34) connected with a highspeed radio-screened d.c. motor (14, 39) as the drive.

5. Low-power household appliance unconnected to mains corresponding to one of the above Claims 1 to 4,
**characterized by the fact that**
in the implementation as a foaming appliance (31) for liquid milk products a longitudinally sliding splash guard (40) is placed on the stainless steel shaft (34) between the swirl wheel (35) and the appliance casing (32).

6. Low-power household appliance unconnected to mains corresponding to one of the above Claims 1 to 5,
**characterized by the fact that**
the electronic charger (2, 15, 37) displays means of limiting the charge current and preventing discharge of the buffer battery (3, 17, 38) via the solar generator (1, 13, 41).

7. Low-power household appliance unconnected to mains corresponding to one of the above Claims 1 to 6,
**characterized by the fact that**
the solar generator (1, 13, 41) is constructed of crystalline silicon solar cells in such a way that at a minimum luminous intensity of 1 mW/cm² a photoelectric voltage can be generated to achieve a minimum charging current of 0.6 mA and that the buffer battery (3, 17, 38) is implemented as a high-load capable NiCd element with a capacity in the range of 150 mAh-200 mAh and a spontaneous discharge loss of less than 1% per day at room temperature.

## Revendications

1. Appareil ménager de faible puissance sans raccordement au réseau (11, 31) pourvu d'un module de mouvement mécanisable (19, 33) et d'un accumulateur tampon (3, 17, 38) alimentant l'entraînement (5, 14, 39) à l'intérieur de l'appareil dont l'accumulateur est rechargeable par une génératrice solaire (1, 13, 41) à exposer à l'ensoleillement étant intégrée dans le boîtier de l'appareil (12, 32) sous le contrôle d'une électronique de recharge (15, 37); conception selon laquelle tous les constituants sont accordés les uns aux autres de manière constructive, locale et temporaire en fonction du prélèvement de puissance requise pour l'entraînement (5, 14, 39) à l'aide de l'accumulateur tampon (3, 17, 38),
**caractérisé en ce que**
le module de mouvement (19, 33) est dimensionné en fonction de la configuration de la génératrice solaire (1, 13, 41) suivant son paramètre nécessaire au calcul de la puissance nominale en le situant directement à l'intérieur de la maison devant une vitre (25) à une intensité lumineuse minimale de 1 mW/cm³ près pour arriver à un prélèvement de puissance qui est de cent à mille fois plus important que la puissance absorbée minimale de la génératrice solaire (1, 13, 41) pour une durée de service de l'entraînement (5, 14, 39) près d'un millième de la durée de recharge de l'accumulateur tampon (3, 17, 38) ayant une capacité à forte intensité et étant conçu de manière à être rechargé pour une durée d'utilisation limitée par l'électronique de charge (15, 37) à 70% au maximum de sa capacité nominale afin d'obtenir une efficacité de charge plus au moins maximale et garantir un processus uniforme de déchargement spontané à un courant de charge pour le moins minimal environ cinq fois plus fort que son courant de compensation pour une durée de charge minimale près de 10 h par jour.

2. Appareil ménager de faible puissance sans raccordement au réseau selon revendication 1,
**caractérisé en ce q u'**
un oeillet d'accrochage (23) est prévu sur le boîtier de l'appareil (12), côté (22)du module de mouvement (19), pour le positionnement direct devant une vitre (25) permettant ainsi de pendre l'appareil sur un crochet (24) placé directement sur la vitre, ce par quoi ledit oeillet (23) est conçu et disposé sur le boîtier (12) de manière à pouvoir former un angle d'incidence favorable (α) à l'ensoleillement (β) entre la génératrice solaire (13) et la vitre (25).

3. Appareil ménager de faible puissance sans raccordement au réseau selon revendication 1,
**caractérisé en ce qu'**
un archet (45) pivotant entre deux butées (43, 44) est prévu; ce qui permet le positionnement direct devant une vitre (25) sur le boîtier (32) au côté opposé (42) du module de mouvement (33) à l'aide duquel l'appareil peut être ou accroché (24) directement sur la vitre (25) ou placé sur l'appui de fenêtre (46) en fonction de la position de pivotement (a, b), ce par quoi ledit archet (45) est conçu et disposé sur le boîtier (32) de manière à pouvoir former un angle d'incidence favorable (α) à l'ensoleillement (β) entre la génératrice solaire (41) et la vitre (25) dans toutes les deux positions de pivotement (a, b).

4. Appareil ménager de faible puissance sans raccordement au réseau selon une des revendications 1 à 3 mentionnées plus haut,
**caractérisé en ce que**
le module de mouvement (19, 33) pour toute variante d'un appareil moussoir (11, 31) pour produits laitiers liquides comprend une roue tourbillonnaire (21, 35) à un degré élevé de tourbillonnement étant disposée sur un arbre en acier fin (20, 34) qui est raccordé à un moteur à courant continu à grand nombre de tours antiparasite (14, 39) comme élément d'entraînement.

5. Appareil ménager de faible puissance sans raccordement au réseau selon une des revendications 1 à 4 mentionnées plus haut,
**caractérisé en ce qu'**
une protection anti-projection (40) décalable le long de l'arbre en acier fin (34) est disposée entre la roue tourbillonnaire (35) et le boîtier de l'appareil (32) pour toute variante d'un appareil moussoir (31) pour produits laitiers liquides.

6. Appareil ménager de faible puissance sans raccordement au réseau selon une des revendications 1 à 5 mentionnées plus haut,
**caractérisé en ce que**
l'électronique de charge (2, 15, 37) dispose des moyens pour limiter le courant de charge et empêcher la décharge de l'accumulateur tampon (3, 17, 38) à l'aide de la génératrice solaire (1, 13, 41).

7. Appareil ménager de faible puissance sans raccordement au réseau selon une des revendications 1 à 6 mentionnées plus haut,
**caractérisé en ce que**
la génératrice solaire (1, 13, 41) est constituée des cellules solaires au silicium cristallines de manière à générer à l'intensité lumineuse minimale de 1 mW/cm³ une tension photoélectrique permettant d'obtenir un courant de charge minimal de 0,6 mA et de manière à ce que l'accumulateur tampon (3, 17, 38) soit disposé comme cellule NiCd ayant une capacité de forte intensité entre 150 mAh et 200 mAh et une perte d'autodécharge de moins de 1 % à température ambiante par jour.
